Europäisches Patentamt

(19) European Patent Office

Office européen des brevets

(11) **EP 0 647 181 B1**

(12) **EUROPEAN PATENT SPECIFICATION**

(45) Date of publication and mention
of the grant of the patent:
**03.01.1996 Bulletin 1996/01**

(21) Application number: **92917462.1**

(22) Date of filing: **20.05.1992**

(51) Int. Cl.$^6$: **B32B 5/18**

(86) International application number: **PCT/SE92/00337**

(87) International publication number: **WO 92/20523**
**(26.11.1992 Gazette 1992/29)**

(54) **SOUND-DAMPING SANDWICH MATERIAL AND A METHOD FOR ITS MANUFACTURE**

SCHALLDÄMPFENDES SANDWICHMATERIAL UND VERFAHREN ZU SEINER HERSTELLUNG

PANNEAU SANDWICH D'ISOLATION ACOUSTIQUE ET PROCEDE DE FABRICATION

(84) Designated Contracting States:
**DE DK ES FR GB IT SE**

(30) Priority: **21.05.1991 SE 9101527**

(43) Date of publication of application:
**12.04.1995 Bulletin 1995/15**

(73) Proprietor: **DIVINYCELL INTERNATIONAL AB**
**S-312 22 Laholm (SE)**

(72) Inventors:
 • **ANDERSSON, Ingvar**
  **S-312 00 Laholm (SE)**
 • **SEGERSTRÖM, Bengt**
  **S-269 03 Östra Karup (SE)**

(74) Representative: **Grennberg, Erik Bertil et al**
**S-103 62 Stockholm (SE)**

(56) References cited:
**DE-A- 2 909 725**      **DE-A- 3 506 488**
**SE-B-  464 514**

## Description

The present invention relates to a sandwich structure which is comprised of a cellular-plastic core sandwiched between two reinforcing layers made, for instance, of metal or of a laminated fibre-glass fabric. The core is built-up of individual, cut shapes, preferably disposed in a checkered pattern, wherein the gaps defined by adjacent shapes are filled with a binder. In the following, the core material is referred to as checkered cut material, although it will be understood that the pattern formed by the cut shapes need not be a checkered pattern.

Such sandwich structures are known, for instance, from SE-A-89 00 981-5 (EP-A-0 389 456), in which the binder used is comprised of a filler to which small plastic spheres have been added, this filler completely filling the aforesaid gaps and thereby providing a structure of high mechanical strength. Checkered cut core material has been used hitherto because of the need to be able to manufacture arched or curved sandwich structures. Flat, imperforate sheets are normally used for the manufacture of flat sandwich structures.

One particular problem relating to lightweight sandwich structures is that because these structures are both rigid and light in weight, they are prone to oscillate within the acoustic frequency range and become sound conducting. This has been found especially troublesome in ships, boats and vehicles in particular. For example, oscillations or vibrations can be induced in the hull of a boat by the boat motor, these oscillations, or vibrations, being so pronounced as to prevent conversation in a normal speaking voice. The lightweight, rigid material from which the outer skin or shell and the deck of a vessel are made thus transmits bodyborne sound. The vibrations concerned may also cause the occurrence of fatigue phenomena.

Although such bodyborne sound can be eliminated by increasing the mass of the sandwich structure, this would eliminate a large part of the advantages afforded by the lightweight but nevertheless strong sandwich material.

Accordingly, a first object of the present invention is to provide a sandwich structure of the aforedescribed kind which inhibits the occurrence of bodyborne sound in constructions built from such material structures.

Another object of the present invention is to provide a general sound-damping material, by which is meant a material which can be used for sound insulation purposes between rooms for instance, and which thus dampens airborne sound.

These and other objects are achieved in accordance with the invention by using as core material a cellular plastic material which is cut into individual shapes, preferably a checkered cut cellular material, in which the gaps defined by mutually adjacent shapes are filled with an elastomeric polymer binder. The invention relates to a method of manufacturing such material, in accordance with Claim 7.

The actual sandwich structure may be either flat or curved or arched, according to the use for which it is intended. Schematically expressed, the inventive material thus dampens both bodyborne sound and airborne sound.

The airborne-sound reduction number, or factor, of a panel is, among other things, dependent on the surface weight of the panel, its flexural rigidity, inner losses and frequency. One important parameter with regard to the acoustic properties of the panel is the so-called coincidence frequency. This parameter is determined by the surface weight and the flexural rigidity of the panel concerned. A decrease in the flexural rigidity of the panel will result in an increase in the coincidence frequency. The reduction number, or factor, may be increased for frequencies at and above the coincidence frequency, provided that the inner losses are increased.

Because the core of the sandwich structure or panel is cut into separate shapes disposed in a checkered pattern and the gaps between these shapes are filled with a material of low rigidity, the flexural rigidity of the panel is reduced for higher frequencies. This results in an increase in the coincidence frequency, and the reduction factor is increased at levels beneath coincidence. The elastic material present in the gaps will also impair the dynamic coupling between the two laminates which embrace the core, thereby also resulting in some improvement in the reduction factor.

It is possible to reduce the propagation of bodyborne sound or mechanical waves in a panel structure, by increasing the inner losses thereof. Measured in decibels per unit of length, damping of the energy flow in the structure is proportional to the loss factor of the material and its wave number. When the panel is flexed, primary losses are caused in the intermediate frequency range by shearing in the core material. This means that an increase in laminate losses will only have a limited effect. On the other hand, by filling the gaps in the core with a viscoelastic material having high losses, the total losses caused by shearing can be greatly increased without appreciably affecting the weight of the material. The presence of the gaps will also reduce the manifest flexural rigidity of the panel structure. This will result in an increase in the wave number. Because both wave number and losses are increased, the damping effect per unit of length is increased with reduced flexing of the plate.

A vibrating panel or sheet will radiate sound. The sound radiating effect of the panel or sheet is contingent on the vibrating velocity of the panel at right angles to the panel surface and also on the acoustic coupling of the panel to the ambient medium, for example ambient air. A reduction in the flexural rigidity of the panel or sheet will result in a reduction in the sound radiating ability of the panel. The greater the losses, the lower the panel velocity. Both effects are achieved by filling the gaps in the core with an elastomeric material in accordance with the invention.

By elastomer is meant a material which exhibits rubber-like, elastic properties. At present, a two-component polyurethane material is preferred, although the use of other materials is also conceivable, provided that they are suitable for use from the aspect of manufacture. Examples of such materials include silicones, plasticized epoxy, urethane modified polyester and soft acrylates.

The rubber-like material used will preferably have a hardness within the range of 10-75, preferably within the range of 20-30 as measured according to Shore D. If the material is too hard, the desired sound-damping effect will not be achieved. If the material is too soft, the mechanical strength is jeopardized. Since corresponding sandwich structures or materials provided with air-filled channels are used at present in many instances, the use of a relatively soft material as a sound-damping means may nevertheless be defended.

One property of the elastomeric material which is of particular interest in the present context is the loss factor of said material. The loss factor $\eta$ can be understood as being the imaginary part of the E-modulus:

$$E = E_o (1+ih)$$

where $\eta$ is a function of both frequency and temperature and is greatest at the glass temperature of the elastomeric material. In accordance with one aspect of the invention, there can thus be used an elastomeric material whose loss factor is greater than 30% and preferably greater than 40%, and this primarily within the frequency range of 200-2000 Hz and at an intended use temperature range, for example a temperature range of -10 - +50°C or 0 - 40°C.

In manufacture, it is preferred to apply surface material to both sides of the cellular plastic core, and then to inject a binder into the still empty gaps defined by adjacent cut shapes in the cellular plastic, so as to fill said gaps with binder. The binder must be relatively flowable or liquid when applying the binder and should afford good adhesion after solidifying and preferably exhibit only small shrinkage.

In accordance with one particular embodiment of the invention, two shape-cut sheets are joined together by means of an elastomeric material, and the resultant unit is used as a core with elastomer-filled gaps between adjacent shapes, which provides a further improvement.

Checkered-cut cellular plastic material in which the square shapes are fastened to a thin carrier web is commercially available . The core material is produced by fastening a carrier web to a complete cellular plastic sheet, whereafter the checkers or shapes are produced by sawing or milling away interspaces to leave a cut checkered web, for instance. In accordance with the invention, the interspaces, or gaps between said shapes, are then filled with an elastomeric thermosetting resin.

However, manufacture can also be carried out in another way, at least in the manufacture of flat sheets, without departing from the concept of the invention. For example, a cellular plastic sheet can be divided into long strips and the strips joined to extruded strips of rectangular cross-section, to form a new sheet which is then divided into strips with sections extending at angles thereto (preferably 90°), these strips then being joined to elastomeric strips in a similar way. The first mentioned sheet may, alternatively, be formed by joining cellular plastic sheets and elastomeric sheets to form a sandwich structure from which strips are cut, these strips thus comprising elastomeric strips joined to cellular plastic strips.

The invention provides a sandwich structure which is effective in dampening sound and from which an effective sound-insulating wall can be constructed, and also exhibit damping properties with regard to the propagation of mechanical waves whose frequencies lie within the audible frequency range.

The invention will now be described with reference to exemplifying embodiments thereof and also with reference to the accompanying drawings, in which:

Figure 1 is a sectional view of a flat sandwich material;

Figure 2 is a sectional view of a curved sandwich material;

Figure 3 is a sound-conducting curve of sandwich material constructed with an uncut cellular plastic core;

Figures 4-8 are curves which illustrate the conductance of sound at different frequencies, measured logarithmically and drawn relative to the curve used as standard in Figure 1; and

Figure 9 illustrates damping of airborne sound in three different materials.

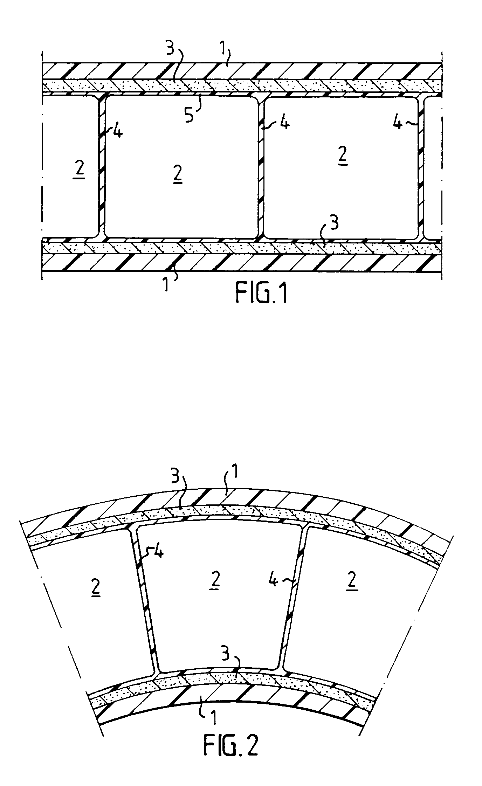

Figures 1 and 2 are sectional views of two sandwich materials or structures, the only difference between these structures being that one is curved and may be double-curved (not shown), while the other is flat.

A checkered-cut core 2 of cellular plastic material is placed between two reinforcing layers 1 which are glued to the core material 2 by glue joints 3. The core material has been cut into shaped pieces to present gaps or channels which are filled with an elastomeric material 4. As will be seen from Figures 1 and 2, the gaps in the case of a flat sandwich structure are straight, while the gaps in the curved sandwich structure are wedge-shaped, due to bending of the structure. For practical reasons, a thin intermediate layer 5 is often included on one side of the sandwich structure. The function of this intermediate layer is to hold the cut shapes together, subsequent to forming the core, until the core can be embodied in the sandwich structure. The core carrier layer may comprise an open-mesh fabric, non-woven fabric or the like, such that the carrier layer will not prevent the glue layer 3 from holding the core material 2 and the reinforcing layers 1 together. In the case of boat constructions, the reinforcing layers, or strength layers, of the sandwich structure will normally comprise a fibre-glass fabric and polyester laminate, although a metal layer, such as an aluminium, aluminium-alloy or steel layer may often be used.

A sandwich structure of this kind is normally manufactured by first fastening the reinforcement layers 1 onto the core material 2, by glue joints 3, while leaving the gaps 4 between the shaped pieces of core material 2 essentially empty. A lowly viscous elastomeric material is then injected into the gaps, suitably starting from the lowest point of the sandwich structure, particularly through holes formed at the points of intersection of the gaps 4, said openings being disposed at the top of the structure and the elastomeric material being caused to displace air from the gaps as it flows therethrough and also to fill said gaps, by delivering the elastomeric material under pressure and/or under the influence of a vacuum generated at the openings provided at the top of the structure. A combination of these latter alternatives is often to be preferred, since an excessively high pressure may cause the joints between reinforcement layers and core material to rupture. In the case of boat manufacture, for instance, it is often possible to place one side of the sandwich structure against a counter-pressure surface and to apply an inwardly acting force from the other side, e.g. with the aid of sandbags.

The invention has been tested with the aid of a number of manufactured examples of sandwich structures:

Example 1

A sandwich structure was manufactured as a reference structure and was comprised of a core made of PVC-cellular plastic with closed cells, our product DIVINYCELL®, quality H60 (60 kg/m²), thickness 20 mm, not checkered-cut. The reinforcement layers were comprised of 1 mm fibre-glass fabric and polyester resin laminates. The sheet weighed 6.8 kg per square meter.

Example 2

There was manufactured a sample structure similar to the structure of Example 1, but with the exception that the core comprised a checkered-cut sheet having square shapes with side measurements of 39 mm and surrounded by gaps of 1 mm in width, these gaps being filled with a polyurethane adhesive (Ceca 18591), tensile strength 814 kN/m²). The sheet had a square meter weight 9.17 kg.

Example 3

There was manufactured a structure similar to the structure of Example 2, but with the exception that two checkered-cut sheets having a thickness of 10 mm were glued together with polyurethane glue. The sheet weighed 7.17 kg per square meter.

Example 4

There was manufactured a sandwich structure similar to the structure of Example 2, but with the exception that the PVC-plastic material H80 of the core had a higher density, 80 kg/m².

Example 5

There was manufactured a sandwich structure similar to the structure of Example 2, but with the exception that the PVC-plastic material H100 of the core had a still higher density, 100 kg/m².

Example 6

A sandwich structure was manufactured similar to the structure according to Example 1, but with the exception that instead of a non-cut sheet of 20 mm thickness, there were used instead two sheets each having a thickness of 10 mm and joined together by a layer of the same polyurethane glue as that used in Examples 2-5. Thus, this sandwich structure had only one damping layer parallel with the sheet.

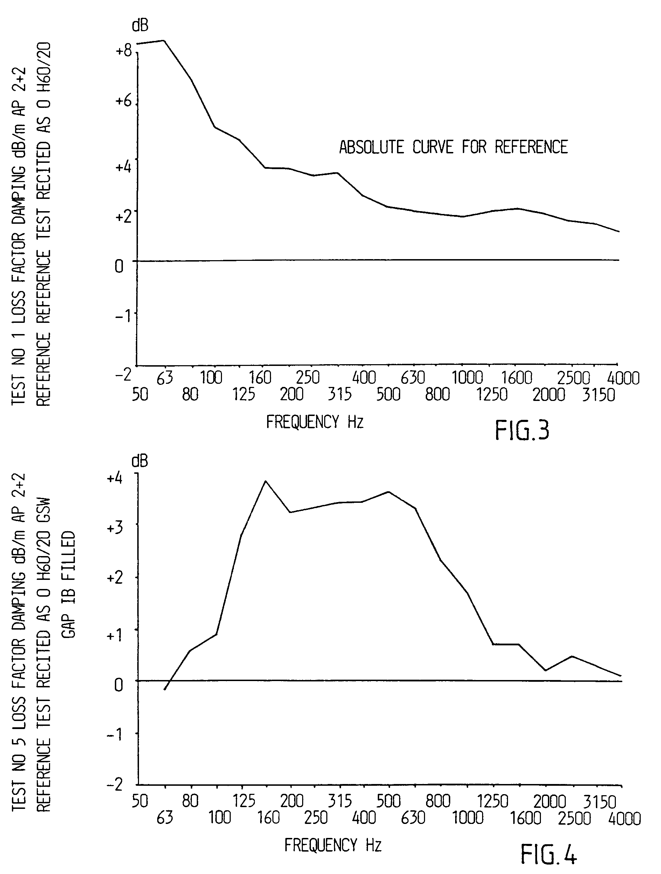

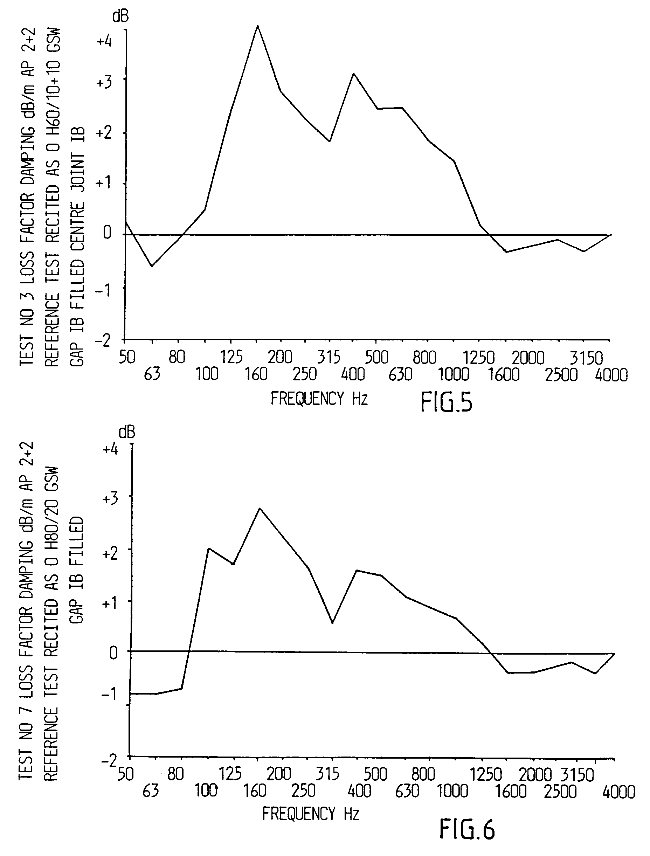

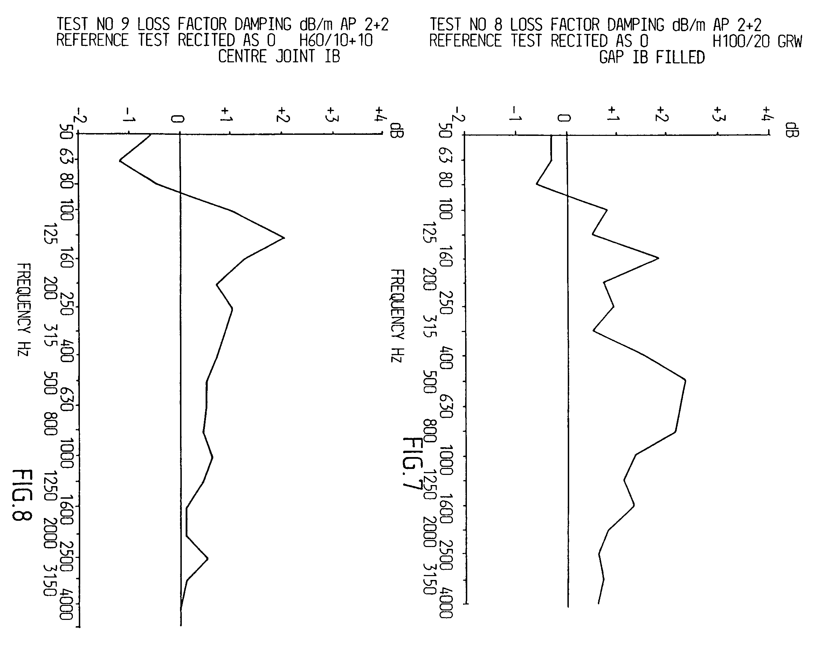

All sheets measured 1.2 x 1.2 m. Comparison tests concerned with the propagation of sound waves were carried out on all sheets. Figure 3 is a sound conductivity curve with logarithmic dB-scale for damping in dB/m, plotted or recorded, between 50 Hz and 4000 Hz. This curve is representative of known sandwich materials having a hard foamed-plastic core with fibre glass layers laminated thereon, such as those structures used at present in the manufacture of boats and vehicles. This curve was therefore taken as a reference and the sound conductivity of the structures produced in accordance with the other Examples were related to this reference as a standard, in that the zero-line in Figures 4-8 corresponds to the result achieved with Example 1, taken as normal.

Figure 4-8 illustrate sound-propagation test results which are normalized in relation to the sheet according to Example 1 for respective Examples 2-6.

As will be seen from Figures 4-8, a pronounced improvement in sound absorption or improved damping of sound conductivity is obtained when the gaps defined in the checkered-cut or shape-cut core material are filled with a material of the proposed type. The improvement is particularly significant within the frequency range of 100-1000 Hz, where sound absorption otherwise falls greatly, as shown in Figure 3.

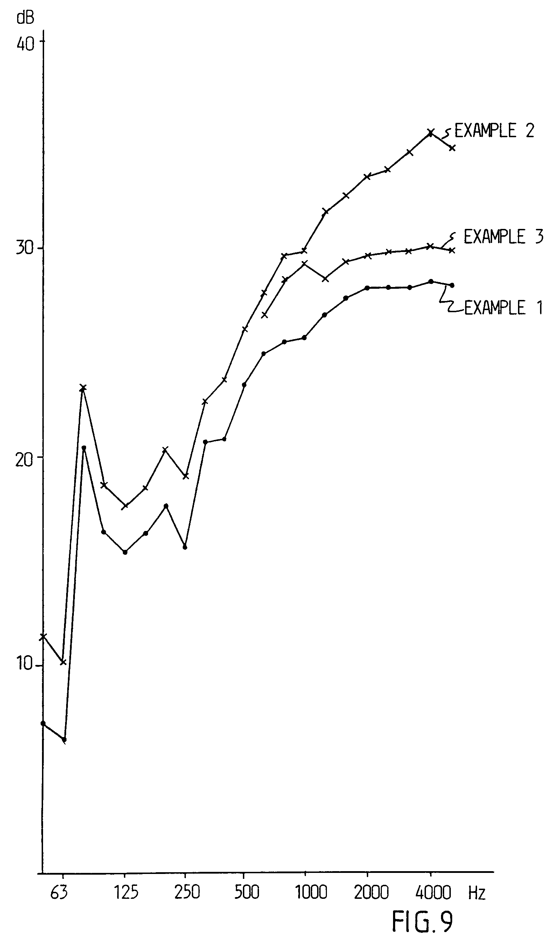

Tests have also been carried out with the intention of investigating and comparing the damping of airborne sound, in which measurements were carried out in accordance with Swedish Standard SS 02 5254 (International Standard ISO 140-1978). Figure 9 illustrates the result obtained with the reference sample according to Example 1 compared with the result obtained with the structure according to Example 2, thus with the sole difference that in one case the material was not checkered-cut and in the other case the material was checkered-cut and the gaps defined between adjacent shapes were filled with elastomeric material. It will be seen from the Figures that the difference in damping was significant and that this damping increases very considerably when the frequency increases to above 500 Hz. Samples measuring 100 x 120 cm were secured around their respective edges in a wall between a transmitter room (106 m$^3$) and a receiver room (120 m$^3$).

The tested polyurethane glue, Ceca 18951, had a hardness of 21 in the Shore D scale. With regard to mechanical strength and also with regard to sound damping, this was found to be particularly well-adapted to PVC-hard foam having a density of 60 kg/m$^3$. Higher densities have greater mechanical strengths, and consequently it is suitable to use harder binders in the gaps when higher mechanical strengths are desired.

With regard to mechanical strength, comparison tests have been carried out with the aid of so-called four-point flexibility tests, in respect of the sheets produced in accordance with Example 1 (imperforate sheet), Example 2 (checkered-cut with filled gaps) and Example 3 (two imperforate sheets placed together with an elastomer therebetween). Surprisingly, both the flexural rigidity and the shear rigidity of these structures were found to have the same values, within measurement errors.

A comparison between the weights per square meter of those sheets of mutually equal thickness showed that the sheet produced in accordance with Example 2 weighed 35% more than the sheet produced in accordance with Example 1, while the sheet produced in accordance with Example 3 weight 5% more.

This 35% addition in weight of the sheet produced in accordance with Example 2 was due to the filled gaps and shall be compared with a conventional filling obtained with a filler that contains plastic microspheres (28%) and with solid polyester filler (44%). In practice, these values apply to the actual core material itself, since the reinforcement layers of the structures described in the Examples were thin, whereas in practice the reinforcement layers of the sandwich structure are stronger and therewith heavier.

A further advantage afforded by the use of an elastomeric material as compared with a conventional binder is that a less fatigue can be expected due to the increased uptake of energy.

## Claims

1. Sandwich structure comprising core material constructed from cellular plastic and an outer reinforcement layer glued to each side of the core, said core material being cut into separate shaped pieces, preferably disposed in a checkered pattern, such as to define therebetween binder filled gaps, **characterized** in that the binder used is a sound-damping elastomeric and polymeric material.

2. A sandwich structure according to Claim 1, **characterized** in that the elastomeric polymer material is a thermosetting resin.

3. A sandwich structure according to Claim 1, **characterized** in that the binder used in the gaps has a mechanical loss factor $\eta$ which exceeds 30%, and preferably exceeds 40% within the frequency range of 200-2000 Hz.

4. A sandwich structure according to Claim 1, **characterized** in that the binder used in the gaps has a hardness of up to 10-75, preferably within the range of 20-30, as measured in Shore D.

5. A sandwich structure according to Claim 1 or 2, **characterized** in that the binder used in the gaps is a polyurethane glue.

6. A sandwich structure according to Claim 1, **characterized** in that the cut core material is a closed-cell foamed PVC-plastic.

7. A sandwich structure according to Claim 1, **characterized** in that the core structure comprises two sheets of cut material which sandwich therebetween a binder of the same kind as that used in said gaps.

8. A method for manufacturing a sandwich structure according to Claim 1, **characterized** by first gluing a respective reinforcement layer on both sides of a cut, extended core material, preferably with the aid of a glue having a loss factor $\eta$ of preferably 40% within the frequency range of 200-2000 Hz; standing the material structure on edge and injecting into the gaps defined by in the cut core material, upwardly through bottom openings, a flowable elastomeric thermosetting material which has a high loss factor in its hardened state, such that all air present in the gaps will be displaced therefrom through openings in the top of the sandwich structure, and then allowing the thermosetting material to set.

9. A method according to Claim 8, **characterized** by placing at least at the bottom of the reinforcement layers means which will function to exert a counter-pressure against the outer surface of said layers so as to prevent the layers from being separated from the core material as the elastomeric thermosetting material is injected into said gaps.

10. A method according to Claim 8, **characterized** by applying a vacuum at the top of the openings.

## Patentansprüche

1. Sandwichmaterial mit einem aus zellularem Kunststoff hergestellten Kernmaterial und einer äußeren Verstärkungsschicht, welche auf beide Seiten des Kerns aufgeklebt ist, wobei das Kernmaterial in getrennte Formstücke geschnitten ist, welche bevorzugt in einem schachbrettartigen Muster angeordnet sind, um dadurch zwischen den Formstücken mit Binder gefüllte Spalten zu definieren, dadurch gekennzeichnet, daß der verwendete Binder ein schalldämpfendes elastomeres und polymeres Material ist.

2. Sandwichmaterial nach Anspruch 1, dadurch gekennzeichnet, daß das elastomere Polymermaterial ein warmaushärtendes Harz ist.

3. Sandwichmaterial nach Anspruch 1, dadurch gekennzeichnet, daß der verwendete Binder in den Spalten einen mechanischen Verlustfaktor aufweist, welcher 30 % und bevorzugt 40 % in dem Frequenzbereich zwischen 200 und 2000 Hz übersteigt.

4. Sandwichmaterial nach Anspruch 1, dadurch gekennzeichnet, daß der in den Spalten verwendete Binder eine Härte bis zu 10-75, vorzugsweise in dem Bereich zwischen 20-30 Shore D aufweist.

5. Sandwichmaterial nach Anspruch 1 oder 2, dadurch gekennzeichnet, daß der in den Spalten verwendete Binder ein Polyurethanklebstoff ist.

6. Sandwichmaterial nach Anspruch 1, dadurch gekennzeichnet, daß das geschnittene Kernmaterial ein geschlossenzellig geschäumter PVC-Kunststoff ist.

7. Sandwichmaterial nach Anspruch 1, dadurch gekennzeichnet, daß die Kernstruktur aus zwei Tafeln aus geschnittenem Material besteht, zwischen denen ein Binder der gleichen Art sandwichartig eingeschlossen ist, wie er in den Spalten verwendet wurde.

8. Verfahren zur Herstellung eines Sandwichmaterials nach Anspruch 1, dadurch gekennzeichnet, daß zunächst eine entsprechende Verstärkungsschicht auf beide Seiten eines geschnittenen ausgedehnten Kernmaterials bevorzugt mit Hilfe eines Klebstoffes, der einen Verlustfaktor von vorzugsweise 40 % in dem Frequenzbereich zwischen 200-200 Hz aufweist, aufgeklebt wird, daß die Materialstruktur auf die Kante gestellt wird und in die zwischen den geschnittenen Kern-material definierten Spalten nach oben durch Bodenöffnungen ein fließfähiges elastomeres, warmaushärtendes Material eingespritzt wird, welches einen hohen Verlustfaktor in seinem ausgehärteten Zustand aufweist, derart, daß die gesamte, in den Spalten vorhandene Luft aus diesem durch Öffnungen auf der Oberseite des Sandwichmaterials verdrängt wird, und daß dann das warmaushärtende Material zum Aushärten gebracht wird.

9. Verfahren nach Anspruch 8, dadurch gekennzeichnet, daß zumindest am Boden der Verstärkungsschichten Einrichtungen vorgesehen werden, welche wirksam sind, um einen Gegendruck gegen die Außenfläche der Schichten auszuüben, um dadurch zu verhindern, daß die Schichten von dem Kernmaterial getrennt werden, während das elastomere, warmaushärtende Material in die Spalten eingespritzt wird.

10. Verfahren nach Anspruch 8, dadurch gekennzeichnet, daß auf der Oberseite der Öffnungen ein Unterdruck aufgebracht wird.

**Revendications**

1. Structure sandwich comprenant un matériau formant âme réalisé à partir de matière plastique cellulaire et une couche de renforcement extérieure collée sur chaque côté de l'âme, ledit matériau formant âme étant découpé en pièces séparées de forme donnée, de préférence disposées selon un motif quadrillé, de façon à définir entre elles des interstices remplis de liant, caractérisée en ce que le liant utilisé est un matériau élastomère et polymère isolant acoustique.

2. Structure sandwich selon la revendication 1, caractérisée en ce que le matériau élastomère polymère est une résine thermodurcissable.

3. Structure sandwich selon la revendication 1, caractérisée en ce que le liant utilisé dans les interstices présente un coefficient de perte mécanique $\eta$ dépassant 30%, et de préférence 40% dans la plage de fréquences de 200-2000 Hz.

4. Structure sandwich selon la revendication 1, caractérisée en ce que le liant utilisé dans les interstices présente une dureté, mesurée en Shore D, allant jusqu'à 10-75, de préférence située dans la plage de 20-30.

5. Structure sandwich selon la revendication 1 ou 2, caractérisée en ce que le liant utilisé dans les interstices est une colle de polyuréthane.

6. Structure sandwich selon la revendication 1, caractérisée en ce que le matériau formant âme qui est découpé est une matière plastique PVC expansée à cellules fermées.

7. Structure sandwich selon la revendication 1, caractérisée en ce que la structure formant âme comprend deux feuilles de matériau découpé qui prennent en sandwich un liant du même type que celui utilisé dans lesdits interstices.

8. Procédé de fabrication d'une structure sandwich selon la revendication 1, caractérisé en ce qu'il consiste d'abord à coller une couche de renforcement sur chacun des deux côtés d'un matériau formant âme, allongé et découpé, de préférence à l'aide d'une colle ayant un coefficient de perte $\eta$ de préférence de 40% dans la plage de fréquences de 200-2000 Hz ; à placer la structure de matériau sur chant, et à injecter dans les interstices définis par le matériau formant âme, découpé, vers le haut à travers des ouvertures inférieures, un matériau élastomère thermodurcissable apte à s'écouler, qui présente un coefficient de perte élevé à l'état durci, de sorte que tout l'air présent dans les interstices soit évacué de ceux-ci à travers des ouvertures ménagées dans la partie supérieure de la structure sandwich, et à laisser ensuite durcir le matériau thermodurcissable.

9. Procédé selon la revendication 8, caractérisé en ce qu'il consiste à placer au moins à la partie inférieure des couches de renforcement des moyens qui agissent pour exercer une contre-pression contre la surface extérieure desdites couches, de façon à empêcher que les couches se séparent du matériau formant âme pendant que le matériau élastomère thermodurcissable est injecté dans lesdits interstices.

10. Procédé selon la revendication 8, caractérisé en ce qu'il consiste à appliquer un vide à la partie supérieure des ouvertures.

FIG.1

FIG.2

FIG.3

FIG.4

TEST NO 3 LOSS FACTOR DAMPING dB/m AP 2+2
REFERENCE TEST RECITED AS 0 H60/10+10 GSW
GAP IB FILLED CENTRE JOINT IB

FIG.5

TEST NO 7 LOSS FACTOR DAMPING dB/m AP 2+2
REFERENCE TEST RECITED AS 0 H80/20 GSW
GAP IB FILLED

FIG.6

TEST NO 8 LOSS FACTOR DAMPING dB/m AP 2+2
REFERENCE TEST RECITED AS 0    H100/20 GRW
GAP IB FILLED

FIG.7

TEST NO 9 LOSS FACTOR DAMPING dB/m AP 2+2
REFERENCE TEST RECITED AS 0    H60/10+10
CENTRE JOINT IB

FIG.8

11

FIG. 9